# DEMANDE DE BREVET EUROPEEN

(11) **EP 1 550 495 A2**
(43) Date de publication de la demande: **06.07.2005**
(21) Numéro de dépôt: 04356204.0
(22) Date de dépôt: 22.12.2004
(51) Int. Cl.: B01D 53/50, C01D 5/02

(54) **Procédé de preparation de sulfate de sodium**

(30) Priorité: 24.12.2003 FR 0315393
(71) Demandeur: Valdi, 42110 Feurs (FR)
(72) Inventeur: Picard, Lyonel, 42110 Feurs (FR); Bertrand, Olivier, 42000 Saint-Etienne (FR); Cheradame, Guy, 01800 Saint Maurice de Gourdans (FR)
(74) Mandataire: Brédeville, Odile Marie

(57) **Abrégé**

La présente invention concerne un procédé de production de sulfate de sodium de grande pureté, caractérisé en ce qu'il comprend les étapes suivantes :
- a) on dispose de catalyseurs usagés comprenant un métal ou une combinaison de métaux choisis parmi le nickel, le cobalt, le molybdène, le vanadium, le titane, le tungstène et leurs mélanges, et comprenant du soufre,
- b) on calcine les catalyseurs usagés réunis en a) à une température allant de 700°C à 1100°C,
- c) on effectue une filtration, dite filtration primaire, des fumées issues de la calcination de façon à obtenir une concentration en poussières dans les fumées filtrées inférieure ou égale à 10 mg/Nm³,
- d) on met en contact par voie sèche les fumées filtrées issues de c) avec du bicarbonate de sodium à une température allant de 160°C à 250°C,
- e) on effectue une filtration, dite filtration secondaire, des fumées obtenues en d) pour obtenir du sulfate de sodium de grande pureté.

L'invention porte également sur l'utilisation de catalyseurs usagés comprenant un métal ou une combinaison de métaux choisis parmi le nickel, le cobalt, le molybdène, le vanadium, le titane, le tungstène et leurs mélanges, et comprenant du soufre, pour la production de sulfate de sodium d'une grande pureté.

## Description

La présente invention concerne un procédé de production de sulfate de sodium d'une grande pureté, ne faisant intervenir aucune adjonction d'eau, et donc par voie sèche.

Des procédés de production de sulfate de sodium à partir d'acide sulfurique et de soude ou de chlorure de sodium sont bien connus. Toutefois, ces procédés sont chers et compliqués. De plus, ils sont dangereux car ils font appel à des produits toxiques.

Il est également connu de WO97/16376 de recristalliser du sulfate de sodium récupéré à partir de crasses provenant du traitement par le bicarbonate de sodium de fumées issues de fours verriers. Toutefois, ce procédé consomme de l'eau et entraîne le rejet dans le milieu naturel de grandes quantités d'eaux salines comprenant par exemple des chlorures, des sulfates, des fluorures.

Il existe donc un besoin d'un procédé de production de sulfate de sodium simple, peu coûteux, présentant peu de risques et permettant d'obtenir un sulfate de sodium particulièrement pur et ne consommant pas d'eau.

La présente invention vise à remédier à ces inconvénients.

La Demanderesse a en effet découvert qu'en choisissant un produit de départ particulier, à savoir des catalyseurs usagés spécifiques et en leur appliquant un traitement thermique suivi d'un traitement spécifique des fumées résultantes ne faisant intervenir aucune adjonction d'eau, à savoir en particulier une première filtration, dite filtration primaire, effectuée en début de procédé sur les fumées issues de la calcination de ces catalyseurs, ladite filtration conduisant à un taux spécifique de poussières dans lesdites fumées de 10 mg/Nm³ maximum, puis une désulfuration de ces fumées avec du bicarbonate de sodium en l'absence totale d'eau, et enfin une deuxième filtration, dite filtration secondaire, il était possible de produire du sulfate de sodium particulièrement pur, et cela de façon particulièrement économique, simple, sans utiliser des substances toxiques telles que la soude et l'acide sulfurique habituellement utilisés dans la production de sulfate de sodium, sans consommer d'eau et en évitant tout rejet aqueux salin dans le milieu naturel.

La présente invention concerne un procédé de production de sulfate de sodium d'une grande pureté ne faisant intervenir aucune adjonction d'eau, comprenant les étapes suivantes :
- a) on dispose de catalyseurs usagés comprenant un métal ou une combinaison de métaux, choisis parmi le nickel, le cobalt, le molybdène, le vanadium, le titane, le tungstène et leurs mélanges (ou alliages), et comprenant du soufre,
- b) on calcine les catalyseurs usagés réunis en a) à une température allant de 700°C à 1100°C,
- c) on effectue une filtration, dite filtration primaire, des fumées issues de la calcination de façon à obtenir une concentration en poussières dans les fumées filtrées inférieure ou égale à 10 mg/Nm³,
- d) on met en contact par voie sèche les fumées filtrées issues de c) avec du bicarbonate de sodium à une température allant de 160°C à 250°C,
- e) on effectue une filtration, dite filtration secondaire, des fumées obtenues en d) pour obtenir un produit solide, sous forme divisée, dont la teneur en sulfate de sodium est supérieure ou égale à 80% en poids, par rapport au poids du produit.

La présente invention concerne également l'utilisation de catalyseurs usagés comprenant un métal ou une combinaison de métaux, choisis parmi le nickel, le cobalt, le molybdène, le vanadium, le titane, le tungstène et leurs mélanges, et comprenant du soufre, pour la production de sulfate de sodium d'une grande pureté.

Le procédé selon l'invention permet d'obtenir du sulfate de sodium particulièrement pur, et cela à partir d'une source de soufre peu coûteuse puisque destinée à être éliminée. Ce sulfate de sodium peut être ensuite réutilisé dans d'autres procédés, comme par exemple dans l'industrie papetière ou dans la fabrication du verre ou des détergents. Ainsi, le procédé selon l'invention permet de préserver le sulfate de sodium naturel ainsi que les matières premières habituellement utilisées dans la fabrication de sulfate de sodium synthétique, telles que la soude, l'acide sulfurique et l'acide chlorhydrique.

Le procédé selon l'invention permet de recycler des matières premières précieuses telles que les métaux précités, et de préserver les ressources naturelles ainsi que l'environnement. C'est également un procédé particulièrement économique.

De plus, le procédé selon l'invention ne nécessite aucune adjonction d'eau. Le bicarbonate de sodium est de préférence ajouté et mis directement au contact des fumées, sous forme de poudre anhydre. Ainsi, le procédé selon l'invention n'utilisant pas d'eau, il préserve également cette ressource naturelle précieuse. Par ailleurs, le procédé selon l'invention ne rejette pas non plus d'eaux usées dans le milieu naturel. Il ne produit aucun résidu non recyclé et donc aucun déchet à mettre en centre d'enfouissement technique.

Par sulfate de sodium de grande pureté, on entend au sens de la présente invention de préférence un produit solide, sous forme divisée, dont la teneur en sulfate de sodium est supérieure ou égale à 80% en poids, de préférence supérieure ou égale à 94% en poids, par rapport au poids du produit. De préférence encore, le sulfate de sodium de grande pureté a la composition suivante :
- la teneur en sulfate de sodium est supérieure ou égale à 94%, en poids, par rapport au poids du produit,
- la teneur en carbonate de sodium est strictement inférieure à 6%, en poids, par rapport au poids du produit,
- la teneur en métaux lourds est strictement inférieure à 10 ppm, et
- la teneur en impuretés diverses est strictement inférieure à 100 ppm.

Par « impuretés diverses », on entend au sens de la présente invention un mélange de silice et/ou d'alumine.

Par « voie sèche », on entend au sens de la présente invention, un procédé totalement anhydre, dans lequel le bicarbonate de sodium est introduit à l'état solide dans la fumée filtrée, sans addition d'eau. Ainsi, le bicarbonate de sodium utilisé se présente de préférence sous forme de poudre et il est de préférence pulvérisé au contact des fumées filtrées sous la forme d'un brouillard. Le procédé selon l'invention ne fait intervenir aucune addition d'eau, sous quelque forme que ce soit.

Dans une première étape du procédé selon l'invention, on réunit des produits de départ sous la forme de catalyseurs usagés comprenant un métal ou une combinaison de métaux, choisis parmi le nickel, le cobalt, le molybdène, le vanadium, le titane, le tungstène et leurs mélanges, et comprenant du soufre. Ces catalyseurs sont généralement utilisés dans l'industrie du pétrole, en particulier dans les procédés de cracking et de raffinage, en particulier pour désulfurer les produits de distillation. Le métal ou la combinaison de métaux peuvent être choisis parmi le Ni-Mo, le Co-Mo, le Ni-Co-Mo, le Ni-V, le Ni-Mo-V, le Ni-W, le Ti-W, le Ti-W-V.

Le support de ces catalyseurs est généralement choisi parmi l'alumine, la silice et leurs mélanges.

Généralement, le métal ou combinaison de métaux est présent minoritairement dans le catalyseur usagé, de préférence à une teneur allant de 5 à 30%, de préférence encore de 15 à 30%, en poids, par rapport au poids du catalyseur usagé.

De préférence, le support est présent dans le catalyseur usagé à une teneur allant de 65 à 90%, de préférence encore de 70 à 85%, en poids, par rapport au poids du catalyseur usagé.

De préférence, le soufre est présent dans le catalyseur usagé à une teneur allant de 3 à 25%, de préférence encore de 8 à 12%, en poids, par rapport au poids du catalyseur.

Ces catalyseurs usagés comprennent également généralement des hydrocarbures et du carbone provenant des produits de distillation que ces catalyseurs ont servi à désulfurer.

Dans une deuxième étape du procédé selon l'invention, les catalyseurs usagés sont calcinés, par exemple dans un four rotatif, à une température pouvant aller de 700°C à 1100°C, de préférence de 800°C à 1000°C. Par calcination, ou encore grillage, on entend au sens de la présente invention, un traitement thermique à haute température permettant d'oxyder le soufre, les hydrocarbures et les produits carbonés présents dans les catalyseurs usagés. Cette étape de calcination a lieu de préférence en continu. La durée de la calcination peut par exemple aller de 10 min à 30 min.

A l'issue de cette étape de calcination, les catalyseurs calcinés constituent une matière première comprenant de la silice et/ou de l'alumine, ainsi que des métaux tels que nickel, le cobalt, le molybdène, le vanadium, le titane, le tungstène et leurs mélanges. Cette matière première est fondue et recyclée à part.

Pour un débit d'entrée des catalyseurs usagés avant calcination d'environ 1 t/h (tonne/heure), les fumées issues de l'étape de calcination comprennent en général de 5 à 25 g/Nm³/h de poussières, de 10 à 50 g/Nm³/h, de préférence de 32 à 48 g/Nm³/h d'oxydes de soufre SOₓ, où x est 2 ou 3, du dioxyde de carbone, de l'eau de combustion, de l'oxygène et de l'azote.

Par « poussières », on entend, au sens de la présente invention, un mélange des composants de départ des catalyseurs usagés, certains de ces composants étant sous la forme oxydée. Ainsi, ces poussières comprennent généralement un mélange du support des catalyseurs, tel que la silice et/ou l'alumine, et des métaux oxydés provenant de l'oxydation des métaux présents au départ dans les catalyseurs usagés. Les métaux oxydés sont en général présents dans les poussières à une teneur allant de 10 à 40% en poids, par rapport au poids des poussières.

Les fumées issues de cette étape de calcination sont en général à une température allant de 700°C à 1100°C, et de préférence à une température d'environ 850°C.

Ces fumées sont ensuite de préférence refroidies à une température allant de 180°C à 250°C, de préférence encore allant de 190°C à 210°C. Le refroidissement des fumées à environ 180-250°C avant l'étape de filtration permet d'obtenir des fumées présentant, après filtration, une température allant de 160°C à 250°C, de préférence allant de 170°C à 190°C, et de réaliser ainsi, lors de l'étape ultérieure, une réaction chimique entre les oxydes de soufre contenus dans les fumées filtrées et le bicarbonate de sodium, présentant un meilleur rendement.

Dans une troisième étape du procédé selon l'invention, les fumées, issues de l'étape de calcination, et de préférence refroidies à environ 180-250°C, sont filtrées afin d'en séparer les poussières jusqu'à ce que la concentration en poussières dans ces fumées soit inférieure ou égale à 10 mg/Nm³, de préférence inférieure ou égale à 5 mg/Nm³, et de préférence encore inférieure ou égale à 3 mg/Nm³.

Dans une forme préférée de réalisation de l'invention, cette filtration, encore appelée filtration primaire, a lieu à l'aide de filtres à manches à haute efficacité. De préférence, les fumées sont introduites dans une chambre et elles passent à travers les manches à une vitesse pouvant aller de 0,80 m/min à 1,20 m/min, et de préférence d'environ 1 m/min. De préférence, le débit de filtration lors de la filtration primaire va de 48 m³/h à 72 m³/h par m² de surface filtrante, et de préférence, ce débit est d'environ 60 m³/h par m² de surface filtrante. De préférence, ces filtres à manches sont en fibres de verre revêtues de polytétrafluoroéthylène (PTFE), en PTFE ou encore en polymères de meta-aramide.

Généralement, lorsque les fumées traversent les filtres à manches, les particules solides qu'on souhaite séparer, en particulier les particules de poussière, se déposent sur les manches. Les manches sont de préférence régulièrement secouées ; les particules solides s'en détachent et sont recueillies spécifiquement.

Les fumées issues de cette étape de filtration, ou fumées filtrées, comprennent un fort taux de gaz soufrés. Ainsi, de préférence, la teneur en oxydes de soufre SOₓ, où x est 2 ou 3, au sein des fumées filtrées, de manière primaire, va de 10 à 50 g/Nm³/h, de préférence de 12 à 15 g/Nm³/h. De préférence, la teneur en poussières, au sein des fumées filtrées, de manière primaire, est inférieure ou égale à 10 mg/Nm³/h, de préférence inférieure ou égale à 5 mg/Nm³/h et de préférence encore inférieure ou égale à 3 mg/Nm³/h. La teneur en oxydes métalliques dans les poussières va généralement de 10% à 30% en poids, par rapport au poids des poussières.

Les fumées filtrées comprennent en outre en général du dioxyde de carbone, de l'eau de combustion, de l'oxygène, de l'azote.

Dans une quatrième étape du procédé selon l'invention, aussi appelée étape de réaction chimique, ces fumées filtrées sont mises en contact avec du bicarbonate de sodium sous forme divisée à une température allant de 160°C à 250°C, de préférence de 170°C à 190°C.

Cette étape de réaction chimique se fait par voie sèche. Le bicarbonate de sodium est introduit à l'état solide dans les fumées, sans addition d'eau. Le bicarbonate de sodium est de préférence injecté sous forme de poudre très fine de façon à obtenir un mélange homogène et intime entre les fumées et le bicarbonate de sodium. De préférence, le bicarbonate de sodium présente une taille moyenne des particules inférieure ou égale à 30 microns, et de préférence encore inférieure ou égale à 20 microns. Le bicarbonate de sodium que l'on trouve dans le commerce convient à la présente invention. Il est possible d'utiliser un bicarbonate de sodium présentant une taille moyenne des particules allant de 100 à 150 microns que l'on soumet à l'action d'un broyeur afin d'obtenir une taille moyenne des particules inférieure ou égale à 30 microns.

Le bicarbonate de sodium est de préférence mélangé aux fumées, par exemple à co-courant, par injection pneumatique. De préférence, le temps de séjour du bicarbonate de sodium au contact des fumées est d'au moins 1 seconde et de préférence encore ce temps de séjour est de 2 secondes. Le bicarbonate de sodium réagit avec les oxydes de soufre pour donner du sulfate de sodium. De préférence, le bicarbonate est mis en oeuvre en un excès de l'ordre de 5 à 10% en poids par rapport à la stoechiométrie de la réaction chimique entre le bicarbonate de sodium et les oxydes de soufre.

Cette réaction peut par exemple avoir lieu au sein d'un réacteur ou d'une gaine.

Dans une cinquième étape du procédé selon l'invention, les fumées issues de l'étape de réaction chimique sont filtrées afin de séparer le sulfate de sodium produit lors de cette réaction.

Dans une forme préférée de réalisation de l'invention, cette filtration, aussi appelée filtration secondaire, a lieu à l'aide de filtres à manches comme pour la filtration primaire. De préférence, les manches sont en fibres de verre revêtues de polytétrafluoroéthylène (PTFE), en PTFE ou encore en polymères de meta-aramide.

Le produit solide, qui se dépose sur les manches du filtre, et qui est ensuite récupéré par secouage de ces manches, a de préférence une teneur en sulfate de sodium supérieure ou égale à 80% en poids, de préférence encore supérieure ou égale à 94% en poids, par rapport au poids du produit. De préférence encore, ce produit a la composition suivante :
- sulfate de sodium > 94%, en poids par rapport au poids du produit,
- carbonate de sodium < 6%, en poids par rapport au poids du produit,
- métaux lourds < 10 ppm
- impuretés < 100 ppm.

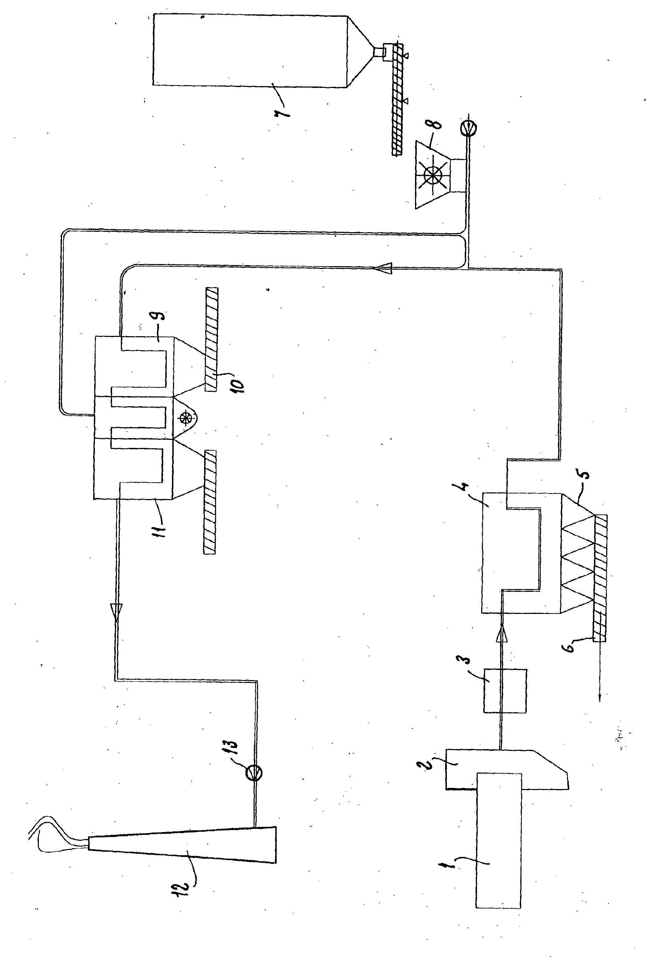

L'invention sera mieux comprise de la description qui suit, en référence à la figure unique, qui représente un schéma de production de sulfate de sodium selon le procédé de l'invention.

En se référant à la figure, les catalyseurs usagés comprenant un métal ou une combinaison de métaux, choisis parmi le nickel, le cobalt, le molybdène, le vanadium, le titane, le tungstène et leurs mélanges, et comprenant du soufre sont introduits dans un four de calcination 1. Les catalyseurs calcinés sont recueillis dans une chambre de post-combustion 2. Les fumées issues de la calcination des catalyseurs sont refroidies à environ 200°C dans une chambre de refroidissement 3. Elles sont ensuite filtrées dans une chambre de filtration primaire 4 comprenant un filtre à manches 5. Les poussières et les métaux extraits des fumées lors de cette étape de filtration primaire sont recueillis dans un système d'extraction 6, puis revalorisés par fusion. Les fumées filtrées sont ensuite mises en contact avec du bicarbonate de sodium préalablement stocké dans un silo 7 et éventuellement broyé dans un broyeur 8. Les fumées chargées du sulfate de sodium résultant de la réaction des oxydes de soufre avec le bicarbonate de sodium sont ensuite filtrées dans une première chambre de filtration 9, et le sulfate de sodium solide est recueilli dans un système d'extraction 10.

Les fumées issues de cette filtration secondaire peuvent ensuite être éventuellement contactées à nouveau par du bicarbonate de sodium en excès et à nouveau filtrées dans une deuxième chambre de filtration 11. Les fumées issues de cette double filtration secondaire sont ensuite évacuées par la cheminée 12.

Un ventilateur d'extraction 13 permet la circulation des fumées dans l'ensemble du dispositif.

### EXEMPLE 1 :

Dans un four de calcination, on a introduit un mélange de catalyseurs usagés, par exemple sous forme de billes, comprenant une combinaison de molybdène et de nickel (Mo-Ni), dont les supports sont en alumine, à raison d'un débit de 1 t/h (tonne/heure). La teneur en soufre au sein d'un catalyseur était de 10% en poids, par rapport au poids du catalyseur. Ces catalyseurs ont été calcinés à 1000°C pendant environ de 10 à 30 minutes.

Au sortir de la calcination, les catalyseurs calcinés ont été recueillis pour être recyclés par fusion.

Les fumées issues de la calcination présentaient un débit de 5000 Nm³/h et une température de 850°C. Elles avaient la composition suivante :
- CO₂ 5 à 10% en volume
- H₂O 5 à 10 % en volume
- O₂ 10 à 15% en volume
- poussières 20 g/Nm³/h
- SOₓ, où x est 2 ou 3 40 g/Nm³/h
- N₂ 70 à 75% en volume

Les poussières comprenaient de 10 à 30% d'oxydes métalliques, par rapport au poids des poussières.

Ces fumées ont été refroidies à 210°C, puis ont été introduites dans une chambre à filtration comprenant un filtre à manches. La vitesse de progression des fumées dans les manches était de 1 m/min.

A l'issue de cette filtration primaire, les fumées filtrées avaient un débit de 15 000 Nm³/h et présentaient une température de 200°C. Elles avaient la composition suivante :
- CO₂ 1,5 à 3% en volume
- H₂O 1,5 à 3 % en volume
- O₂ 18 à 20% en volume
- poussières < 2 mg/Nm³/h
- SOₓ, où x est 2 ou 3 13,3 g/Nm³/h
- N₂ 75 à 80% en volume

Du bicarbonate de sodium sous forme de poudre de taille moyenne des particules d'environ 20 microns a ensuite été injecté dans ces fumées à une température de 200°C, à co-courant par injection pneumatique à un débit de 600 kg/h. Du fait de l'injection ventilée du bicarbonate de sodium, le débit des fumées a légèrement augmenté. Ces fumées présentaient alors une température de 180°C. Leur composition avant réaction avec le bicarbonate de sodium était la suivante :
- CO₂ 1,2 à 2,5% en volume
- H₂O 1,2 à 5 % en volume
- O₂ 19 à 20% en volume
- poussières < 2 mg/Nm³/h
- SOₓ, où x est 2 ou 3 10 g/Nm³/h
- N₂ 75 à 80% en volume

Les fumées ont été mises en contact pendant 2 secondes avec le bicarbonate de sodium. Après réaction avec le bicarbonate de sodium, le sulfate de sodium produit est recueilli sur les manches du filtre au travers desquelles les fumées passent.

Le produit à forte concentration en sulfate de sodium recueilli avait la composition suivante :
- sulfate de sodium > 94%, en poids par rapport au poids du produit
- carbonate de sodium < 6%, en poids par rapport au poids du produit
- métaux lourds < 10 ppm
- impuretés < 100 ppm.

### EXEMPLE 2 :

Dans un four de calcination, on a introduit un mélange de catalyseurs usagés comprenant une combinaison de nickel, molybdène et vanadium (Ni-Mo-V), dont les supports sont en alumine, à raison d'un débit de 2 t/h (tonne/heure). La teneur en soufre au sein d'un catalyseur était de 10% en poids, par rapport au poids du catalyseur. Ces catalyseurs ont été calcinés à 1000°C pendant environ de 10 à 30 minutes.

Au sortir de la calcination, les catalyseurs calcinés ont été recueillis pour être recyclés par fusion.

Les fumées issues de la calcination présentaient un débit de 10000 Nm³/h et une température de 850°C. Elles avaient la composition suivante :
- CO₂ 5 à 10% en volume
- H₂O 5 à 10 % en volume
- O₂ 10 à 15% en volume
- poussières 20 g/Nm³/h
- SOₓ, où x est 2 ou 3 40 g/Nm³/h
- N₂ 70 à 75% en volume

Les poussières comprenaient de 10 à 30% en oxydes métalliques, par rapport au poids des poussières.

Ces fumées ont été refroidies à 210°C puis ont été introduites dans une chambre à filtration comprenant un filtre à manches. La vitesse de progression des fumées dans les manches était de 1 m/min.

A l'issue de cette filtration primaire, les fumées filtrées avaient un débit de 15 000 Nm³/h et présentaient une température de 200°C. Elles avaient la composition suivante :
- CO₂ 1,5 à 3% en volume
- H₂O 1,5 à 3 % en volume
- O₂ 18 à 20% en volume
- poussières < 2 mg/Nm³/h
- SOₓ, où x est 2 ou 3 26,6 g/Nm³/h
- N₂ 75 à 80% en volume

Du bicarbonate de sodium sous forme de poudre de taille moyenne des particules d'environ 20 microns a ensuite été injecté dans ces fumées à une température de 200°C, à co-courant par injection pneumatique à un débit de 1200 kg/h. Du fait de l'injection ventilée du bicarbonate de sodium, le débit des fumées a légèrement augmenté. Ces fumées présentaient alors une température de 180°C. Leur composition avant réaction avec le bicarbonate de sodium était la suivante :
- CO₂ 1,2 à 2,5% en volume
- H₂O 1,2 à 5 % en volume
- O₂ 19 à 20% en volume
- poussières < 3 mg/Nm³/h
- SOₓ, où x est 2 ou 3 20 g/Nm³/h
- N₂ 75 à 80% en volume

Les fumées ont été mises en contact pendant au moins 1 seconde avec le bicarbonate de sodium. Après réaction avec le bicarbonate de sodium, le sulfate de sodium produit est recueilli sur les manches du filtre au travers desquelles les fumées passent.

Le produit à forte concentration en sulfate de sodium recueilli avait la composition suivante :
- sulfate de sodium > 94%, en poids par rapport au poids du produit
- carbonate de sodium < 6%, en poids par rapport au poids du produit
- métaux lourds < 10 ppm
- impuretés < 100 ppm.

La présente invention n'est pas limitée aux formes d'exécution décrites dans la présente demande à titre d'exemples.

## Revendications

1. Procédé de production de sulfate de sodium de grande pureté, **caractérisé en ce qu'**il comprend les étapes suivantes :
- a) on dispose de catalyseurs usagés comprenant un métal ou une combinaison de métaux, choisis parmi le nickel, le cobalt, le molybdène, le vanadium, le titane, le tungstène et leurs mélanges, et comprenant du soufre,
- b) on calcine les catalyseurs usagés réunis en a) à une température allant de 700°C à 1100°C,
- c) on effectue une filtration, dite filtration primaire, des fumées issues de la calcination, de façon à obtenir une concentration en poussières dans les fumées filtrées inférieure ou égale à 10 mg/Nm³,
- d) on met en contact par voie sèche les fumées filtrées issues de c) avec du bicarbonate de sodium à une température allant de 160°C à 250°C,
- e) on effectue une filtration, dite filtration secondaire, des fumées obtenues en d) pour obtenir un produit solide, sous forme divisée, dont la teneur en sulfate de sodium est supérieure ou égale à 80% en poids, par rapport au poids du produit.

2. Procédé selon la revendication 1, **caractérisé en ce que** le soufre est présent dans le catalyseur usagé à une teneur allant de 3 à 25%, de préférence de 8 à 12%, en poids, par rapport au poids du catalyseur.

3. Procédé selon l'une quelconque des revendications précédentes, **caractérisé en ce que** les fumées sont refroidies à une température allant de 180°C à 250°C, de préférence allant de 190°C à 210°C, entre l'étape b) et l'étape c).

4. Procédé selon l'une quelconque des revendications précédentes, **caractérisé en ce que** la concentration en poussières dans les fumées filtrées, de manière primaire, est inférieure ou égale à 5 mg/Nm³, de préférence inférieure ou égale à 3 mg/Nm³.

5. Procédé selon l'une quelconque des revendications précédentes, **caractérisé en ce que** le débit de filtration lors de la filtration primaire va de 48 m³/h à 72 m³/h par m² de surface filtrante, de préférence est d'environ 60 m³/h par m² de surface filtrante.

6. Procédé selon l'une quelconque des revendications précédentes, **caractérisé en ce que** la teneur en oxydes de soufre SOₓ, où x est 2 ou 3, au sein des fumées filtrées, de manière primaire, va de 10 à 50 g/Nm³/h, de préférence de 12 à 15 g/Nm³/h.

7. Procédé selon la revendication précédente, **caractérisé en ce que** le bicarbonate est mis en oeuvre, à l'étape d), en un excès de l'ordre de 5 à 10% en poids par rapport à la stoechiométrie de la réaction chimique entre le bicarbonate de sodium et les oxydes de soufre.

8. Procédé selon l'une quelconque des revendications précédentes, **caractérisé en ce que** le temps de séjour du bicarbonate au contact des fumées est d'au moins 1 seconde, et de préférence de 2 secondes.

9. Procédé selon l'une quelconque des revendications précédentes, **caractérisé en ce que** la température mise en oeuvre à l'étape d) va de 170°C à 190°C.

10. Utilisation de catalyseurs usagés comprenant un métal ou une combinaison de métaux choisis parmi le nickel, le cobalt, le molybdène, le vanadium, le titane, le tungstène et leurs mélanges, et comprenant du soufre, pour la production de sulfate de sodium d'une grande pureté.
